(19) **Europäisches Patentamt**
**European Patent Office**
**Office européen des brevets**

(11) **EP 2 669 163 B1**

(12) **EUROPEAN PATENT SPECIFICATION**

(45) Date of publication and mention
of the grant of the patent:
**16.03.2016 Bulletin 2016/11**

(51) Int Cl.:
***B62J 6/02*** *(2006.01)*  ***B60Q 1/18*** *(2006.01)*
***F21S 8/10*** *(2006.01)*

(21) Application number: **13169708.8**

(22) Date of filing: **29.05.2013**

(54) **Sub headlight unit and sub headlight system for use in vehicle that leans into turns, vehicle that leans into turns and method for controlling such sub headlight unit**

Unterscheinwerfereinheit und Unterscheinwerfersystem zur Verwendung in einem Fahrzeug, das sich in Kurven lehnt, und Verfahren zur Steuerung einer Unterscheinwerfereinheit

Sous-bloc optique, procédé de commande d'un sous-bloc optique et système de bloc optique pour véhicule qui penche dans les virages et véhicule qui penche dans les virages

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2012 JP 2012125267**

(43) Date of publication of application:
**04.12.2013 Bulletin 2013/49**

(73) Proprietor: **Yamaha Hatsudoki Kabushiki Kaisha Iwata-shi, Shizuoka 438-8501 (JP)**

(72) Inventors:
• **Inoue, Takehiro**
**Iwata-shi, Shizuoka 438-8501 (JP)**

• **Kosugi, Makoto**
**Iwata-shi, Shizuoka 438-8501 (JP)**

(74) Representative: **Grünecker Patent- und Rechtsanwälte**
**PartG mbB**
**Leopoldstraße 4**
**80802 München (DE)**

(56) References cited:
**JP-A- 2010 149 836**      **JP-U- S6 429 041**
**US-A- 5 426 571**         **US-A1- 2002 196 639**
**US-A1- 2005 270 785**     **US-A1- 2008 225 535**
**US-A1- 2011 210 666**

**EP 2 669 163 B1**

**Description**

The present invention relates to a vehicle that leans into turns according to the preamble of independent claim 1 as well as to a method for controlling a sub headlight of a vehicle that leans into turns. Such a vehicle can be taken from the prior art document US 2005/0270785 A1.

Prior art document US 2005/0270785 A1 discloses a vehicle headlight unit comprising a sensor-controlled corrective device for the light beam pattern generated by the dipped low beam, at least one central headlight for driving in a straight line and one respective lateral headlight positioned to the right and left thereof. The right-hand headlight is provided for illuminating left-hand bends and the left-hand headlight is provided for illuminating right-hand bends. Each headlight is rotated away from the horizontal position about its optical axis through an incline-compensation angle, so that the outer edge that lies at a distance from the central headlight is in a lower position than the latter. The corrective device comprises an electronic control unit, which activates at least the central headlight within a driving range for a substantially upright driving position and when bends are negotiated and a minimal tilting angle is exceeded, deactivates the central headlight and activates either the left-hand or right-hand headlight.

In general, in a vehicle that leans into turns (such as saddle-ride type vehicles including motorcycles, three-wheeled motor vehicles, snowmobiles, and ATVs (all terrain vehicles)), when the vehicle corners or turns at an intersection, a rider operates a handlebar and additionally shifts his/her own weight in order to counteract centrifugal force acting on a vehicle body. Thereby, the vehicle turns with an attitude (hereinafter, also referred to as "lean attitude") leaning to the inner side of a curve. On the other hand, in a vehicle that does not lean into turns, for example, in an automobile, when the vehicle corners or turns at an intersection, a driver operates a steering wheel and turns with centrifugal force acting on a vehicle body. Therefore, in the vehicle that does not lean into turns, the vehicle body leans to the outer side of a curve due to the centrifugal force.

In the vehicle that leans into turns, the turning is made with an active use of the weight shifting of the rider himself/herself. Therefore, the vehicle body largely leans. In the vehicle that does not lean into turns, the vehicle body leans to the outer side of the curve due to the centrifugal force. The degree of this leaning varies depending on the running speed of the vehicle and the magnitude (radius) of the curve, and this leaning of the vehicle body is not utilized for the turning. In the vehicle that does not lean into turns, it is preferable that the amount of leaning to the outer side of the curve due to the centrifugal force is small.

Thus, at a time of cornering or turning at an intersection, the vehicle that leans into turns causes the vehicle body to lean to the inner side of the curve with a relatively large amount of leaning, while the vehicle that does not lean into turns causes the vehicle body to lean to the outer side of the curve with a relatively small amount of leaning.

Normally, a vehicle is provided with a plurality of lights irrespective of whether or not the vehicle leans into turns. The lights include a light intended mainly to ensure a field of view of a rider of the vehicle and a light intended mainly to enable a surrounding vehicle or the like to recognize the presence of the own vehicle. A headlight is the light intended mainly to ensure the field of view of the rider of the vehicle, and in general, is configured to switch between a high beam (running headlight) and a low beam (passing headlight).

The high beam, which emits light in a horizontal (upward) direction, ensures a field of view at a long distance. Generally, in order to avoid dazzling a rider of a surrounding vehicle or the like, the high beam is used in a situation where there is no vehicle or the like existing ahead at night. The low beam, which emits light in a downward direction, is used even in a situation where there is a vehicle or the like existing ahead. Therefore, in a normal case, a vehicle often runs with the low beam turned on.

When the vehicle that leans into turns is running on a straight road, an illumination range of a headlight light source (low beam) spreads evenly to the right and left in an area ahead in an advancing direction and below a horizontal plane including the headlight light source. When the vehicle that leans into turns is running on a road curving to the left, the vehicle runs with the vehicle body inclined to the left. Accordingly, the illumination range of the headlight light source spreads downward to the left. As a result, a nearer position on a running lane is illuminated. Thus, the illumination range in an area inside the curve and ahead in the advancing direction is reduced.

Therefore, a vehicle has been proposed in which, in addition to a main headlight that illuminates an area ahead of the vehicle, a plurality of sub headlights arranged in a substantially V-shaped manner in a front portion of the vehicle are provided as the headlight. The plurality of sub headlights are configured such that the sub headlights arranged at the side opposite to the side to which the vehicle is leaning are sequentially turned on from the lower side along with an increase in a lean angle of the vehicle (the angle of inclination of a vehicle body to the inner side of a curve relative to an upright state thereof) (JP 2009-120057 A). In the vehicle disclosed in JP 2009-120057 A, the sub headlight arranged lowermost is firstly turned on, and then, in accordance with an increase in the lean angle, the sub headlight arranged second lowermost is turned on. At a time when the sub headlight arranged second lowermost is turned on, the sub headlight arranged lowermost is turned off. In this manner, the sub headlight that is turned on is sequentially switched over from the lower side. In the vehicle disclosed in JP 2009-120057 A, at a time point when a sub headlight is turned on, an illumination range of this light source is additionally provided. This can suppress a reduction in the illumination range which may be caused by inclination of the vehicle.

However, in the vehicle disclosed in JP 2009-120057 A, a rider may sometimes feel uncomfortable about a change in the illumination range in the course of sequentially turning on the plurality of sub headlights along with an increase or decrease in the lean angle.

(i) In the vehicle disclosed in JP 2009-120057 A, a plurality of sub headlight light sources are arranged in a substantially V-shaped manner, and the sub headlight light sources arranged at the side opposite to the side to which the vehicle is leaning are sequentially turned on from the lower side along with an increase in the lean angle. Accordingly, as compared with the sub headlight light source configured to be turned on upon a small lean angle of the vehicle, the sub headlight light source configured to be turned on upon a large lean angle is located upper and outer at the side opposite to the side to which the vehicle is leaning.

When seen from the front side of the vehicle, a trajectory of movement of the sub headlight light source in accordance with a change in the lean angle of the vehicle is in the shape of a circular arc. Therefore, when the vehicle in the upright state starts to be inclined, the plurality of sub headlight light sources arranged at the side opposite to the side to which the vehicle is leaning firstly move upward. As the lean angle increases, the width of upward movement of the sub headlight light sources decreases. Then, the sub headlight light sources reach its highest position, and then move downward. However, in the vicinity of the highest position, the width of downward movement of the sub headlight light sources is small. That is, in the course of an increase in the lean angle, the sub headlight light sources firstly move from their upright-state positions to their highest positions. Then, after the sub headlight light sources further move to the side to which the vehicle is leaning by a distance equal to the distance they have moved from the upright-state positions to the highest positions, the heights of the sub headlight light sources return to their upright-state heights. During this period, although the lean angle is increasing, the heights of the sub headlight light sources do not fall below the upright-state height.

Nevertheless, in the vehicle disclosed in JP 2009-120057 A, the plurality of sub headlight light sources arranged at the side opposite to the side to which the vehicle is leaning are sequentially turned on from the lower and inner side with respect to a width direction of the vehicle in accordance with an increase in the lean angle.

Therefore, the sub headlight configured to be turned on upon a small lean angle of the vehicle is located at a relatively low position at a time when this sub headlight is turned on, while the sub headlight configured to be turned on upon a large lean angle of the vehicle is located at a relatively high position at a time when this sub headlight is turned on.

This causes a relatively large difference in the heights of the sub headlight light sources at times when these sub headlight light sources are turned on. Thus, a difference in the angles of light emission from the respective sub headlight light sources within a rider's field of view is relatively large. As a result, a difference in the shapes of shadows, which are produced when an obstacle (such as unevenness of a ground surface) exists, is large, and a difference in the brightness of reflected light from a road surface or a surrounding object is also large. Moreover, when the angle of light emission varies, the shape of the illumination range is also likely to vary.

(ii) A situation where the vehicle corners or turns at an intersection is not always the same, and there are a wide variety of running scenes.

For example, even on a road having a curve with the same radius, some vehicles pass through the curve at a relatively low speed, and other vehicles pass through the curve at a relatively high speed. At this time, the lean angle of the vehicle passing at the high speed is changed more rapidly than the lean angle of the vehicle passing at the low speed. That is, even though a vehicle passes through a road having a curve with the same radius, the amount of change in the lean angle per unit time varies depending on the vehicle speed.

Furthermore, even when the vehicle is running at the same speed, the lean angle is gently changed in a curve with a large radius while the lean angle is rapidly changed in a curve with a small radius. Accordingly, for example, in a case of continuously passing through a plurality of curves having different radii during touring on a mountain road, the amount of change in the lean angle per unit time changes in each curve, even though the speed does not change so much.

In this manner, the amount of change in the lean angle per unit time varies depending on the running scene. In the course of sequentially turning on the plurality of sub headlights along with an increase or decrease in the lean angle of the vehicle body, when the amount of change in the lean angle per unit time varies, a time interval at which the sub headlights are turned on also varies. For example, as the amount of change in the lean angle per unit time increases, the time interval at which the sub headlights are turned on is shortened.

(iii) When a sub headlight light source is turned on, an illumination range of the sub headlight light source newly appears in the rider's field of view. Therefore, a state of the illumination range produced at a time when the sub headlight light source is turned on is relatively impressive for the rider. Accordingly, for example, when a difference in the states of the illumination ranges at times when the sub headlight light sources are turned on is large when seen from the rider as mentioned in (i) above under a situation where the sub headlight light sources are turned on at short time intervals as mentioned in (ii) above, the state within the rider's field of view is changed one after another. As a result, depending on the running scene, the rider may feel uncomfortable about a change in the state of the illumination range of the sub headlight light source within the field of view.

It is an object of the present invention to provide a vehicle that leans into turns as well as a method for controlling a sub headlight of a vehicle that leans into turns which can suppress occurrence of a situation where a rider feels uncomfortable about a change in an illumination range in the course of sequentially turning on a plurality of sub headlights along with an increase or decrease in the lean angle of a vehicle body.

According to the present invention said object is solved by a vehicle that leans into turns having the features of claim **1** as well as a method for controlling a sub headlight of a vehicle that leans into turns having the features of independent claim **5**. Preferred embodiments are laid down in the dependent claims.

Accordingly, it is provided (1) a sub headlight unit for use in a vehicle that leans into turns,
the sub headlight unit including a plurality of sub headlight light sources that illuminate, at the same side as the side to which the vehicle is leaning, an area ahead and outward of the vehicle with respect to a width direction of the vehicle,
the plurality of sub headlight light sources being arranged such that, under a state where the vehicle is upright, each of them is positioned at the side opposite to the side to which the vehicle is leaning leans for turning on the plurality of sub headlight light sources, and the plurality of sub headlight light sources being configured to be turned on in accordance with different lean angles of the vehicle,
the sub headlight light source configured to be turned on upon a large lean angle of the vehicle being located lower and outer at the side opposite to the side to which the vehicle is leaning with respect to the width direction of the vehicle than the sub headlight light source configured to be turned on upon a small lean angle of the vehicle.

In a configuration of (1), the plurality of sub headlight light sources arranged at the side opposite to the side to which the vehicle is leaning are sequentially turned on from the upper and inner side with respect to the width direction of the vehicle in accordance with an increase in the lean angle.

As described above, in the course of an increase in the lean angle, the sub headlight light sources firstly move from the upright-state positions to the highest positions, and then, after the sub headlight light sources further move to the side to which the vehicle is leaning by a distance equal to the distance they have moved from the upright-state positions to the highest positions, the heights of the sub headlight light sources return to their upright-state heights. This distance is longer as the sub headlight light source is located outer with respect to the width direction of the vehicle. Therefore, the sub headlight light source located inner with respect to the width direction of the vehicle starts to move downward below its upright-state position, when the lean angle is relatively small. On the other hand, the sub headlight light source located outer with respect to the width direction of the vehicle starts to move downward below its upright-state position, when the lean angle increases to a relatively large angle.

Accordingly, such a configuration that the plurality of sub headlight light sources are sequentially turned on from the one located uppermost and innermost with respect to the width direction of the vehicle in accordance with an increase in the lean angle of the vehicle enables the sub headlight light sources to be turned on at relatively high positions, and additionally can reduce a difference in the heights of the sub headlight light sources at times when they are turned on.

As a result, occurrence of a situation where the rider feels uncomfortable about a change in the illumination range can be suppressed in the course of sequentially turning on the plurality of sub headlights along with an increase or decrease in the lean angle of the vehicle body.

(2) The sub headlight unit according to (1), wherein
when seen from the front side of the vehicle, the plurality of sub headlight light sources are arranged in the shape of a circular arc whose center is located below the plurality of sub headlight light sources.

In a configuration of (2), the sub headlight light sources are arranged in the shape of a circular arc, which is similar to the trajectory of movement of the sub headlight light source in accordance with an increase in the lean angle. This can further reduce the difference in the heights of the sub headlight light sources at times when they are turned on. As a result, occurrence of a situation where the rider feels uncomfortable about a change in the illumination range can be more effectively suppressed in the course of sequentially turning on the plurality of sub headlights along with an increase or decrease in the lean angle of the vehicle body.

(3) The sub headlight unit according to (2), wherein
the center of the circular arc is located at a position where a front wheel of the vehicle is grounded.

In a configuration of (3), the sub headlight light sources are arranged in the shape of a circular arc, which is substantially the same as the trajectory of movement of the sub headlight light source in accordance with an increase in the lean angle. This can still further reduce the difference in the heights of the sub headlight light sources at times when they are turned on. As a result, occurrence of a situation where the rider feels uncomfortable about a change in the illumination range can be further effectively suppressed in the course of sequentially turning on the plurality of sub headlights along with an increase or decrease in the lean angle of the vehicle body.
(4) The sub headlight unit according to any one of (1) to (3), wherein
when any of the plurality of sub headlight light sources is turned on, said sub headlight light source is located highest among the plurality of sub headlight light sources.

A configuration of (4) enables the sub headlight light sources to be kept at relatively high positions at times when the sub headlight light sources are turned on. As a result, occurrence of a situation where the rider feels uncomfortable about a change in the illumination range can be further effectively suppressed in the course of sequentially turning on the plurality of sub headlights along with an increase or decrease in the lean angle of the vehicle body.
(5) The sub headlight unit according to any one of (1) to (4), wherein
the sub headlight light source that is located highest when the vehicle is upright is positioned above a main headlight provided in the vehicle, the main headlight being configured to illuminate an area ahead in front of the vehicle.

A configuration of (5) enables the sub headlight light sources to be kept at relatively high positions. As a result, occurrence of a situation where the rider feels uncomfortable about a change in the illumination range can be further effectively suppressed in the course of sequentially turning on the plurality of sub headlights along with an increase or decrease in the lean angle of the vehicle body.
(6) A sub headlight system for use in a vehicle that leans into turns,
the sub headlight system including:

the sub headlight unit according to any one of (1) to (5);
a detection part that detects a variable available for obtaining the lean angle of the vehicle; and
a control part that turns on the plurality of sub headlight light sources in accordance with the lean angle of the vehicle obtained based on a result of detection by the detection part.

A configuration of (6) achieves an AFS (Adaptive Front-Lighting System) that enables suppression of occurrence of a situation where the rider feels uncomfortable about a change in the illumination range in the course of sequentially turning on the plurality of sub headlights along with an increase or decrease in the lean angle of the vehicle body.
(7) A vehicle that leans into turns,
the vehicle including the system according to (6).

A configuration of (7) can suppress occurrence of a situation where the rider feels uncomfortable about a change in the illumination range in the course of sequentially turning on the plurality of sub headlights along with an increase or decrease in the lean angle of the vehicle body.

[EFFECTS OF THE INVENTION]

Occurrence of a situation where a rider feels uncomfortable about a change in an illumination range can be suppressed in the course of sequentially turning on a plurality of sub headlights along with an increase or decrease in the lean angle of a vehicle body.
Hereinafter, the present invention is illustrated and explained by means of preferred embodiments in conjunction with the accompanying drawings.

[BRIEF DESCRIPTION OF THE DRAWINGS]

[FIG. 1] A front elevational view schematically showing, on an enlarged scale, a part of a motorcycle according to an embodiment of the present teaching.

[FIG. 2] A left side view schematically showing, on an enlarged scale, a part of the motorcycle shown in FIG. 1.

[FIG. 3] A block diagram showing a basic configuration concerning sub headlight units of the motorcycle shown in FIG. 1.

[FIG. 4] (a) is a view from the rear that coincide with the riders view and schematically showing optical axes and cut-off lines of sub headlight light sources of the motorcycle in an upright state; and (b) is a view from the rear that coincide with the riders view and schematically showing the optical axes and the cut-off lines of the sub headlight light sources of the motorcycle with a lean attitude.

[FIG. 5] (a) to (c) are diagrams for explaining an example of a process in which a plurality of sub headlight light sources are sequentially turned on in accordance with an increase in a lean angle of the motorcycle leaning to the left.

[FIG. 6] A front elevational view schematically showing the motorcycle during the process in which the plurality of sub headlight light sources are turned on in accordance with an increase in the lean angle of the motorcycle leaning to the left.

[FIG. 7] A diagram showing a part of FIG. 6 on an enlarged scale.

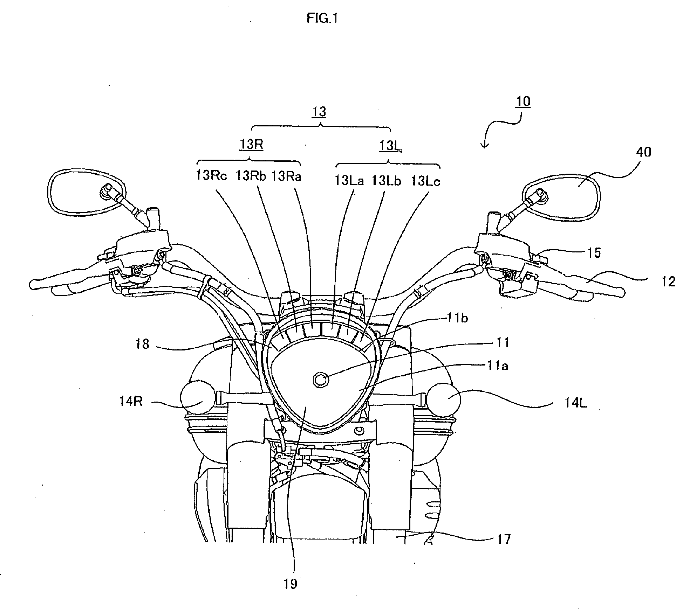

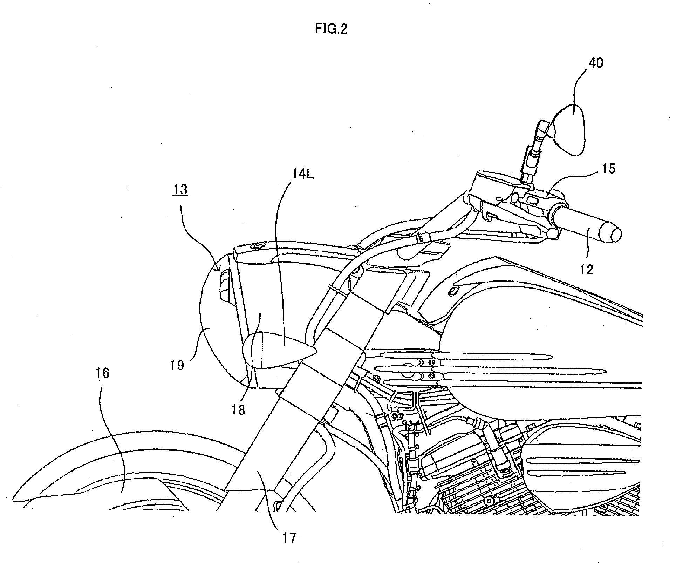

FIG. 1 is a front elevational view schematically showing, on an enlarged scale, a part of a motorcycle according to an embodiment of the present teaching. FIG. 2 is a left side view schematically showing, on an enlarged scale, a part of the motorcycle shown in FIG. 1.

A motorcycle 10 is an example of a vehicle that leans into turns according to the present teaching. According to the present teaching, no particular limitation is put on the vehicle that leans into turns. For example, saddle-ride type vehicles including motorcycles, three-wheeled motor vehicles, snowmobiles, and ATVs (all terrain vehicles) may be mentioned. In the following description, the terms "front" and "back" are terms with respect to an advancing direction of the vehicle, the terms "up" and "down" are terms with respect to the vertical direction of the vehicle, and the terms "right" and "left" are terms with respect to a rider.

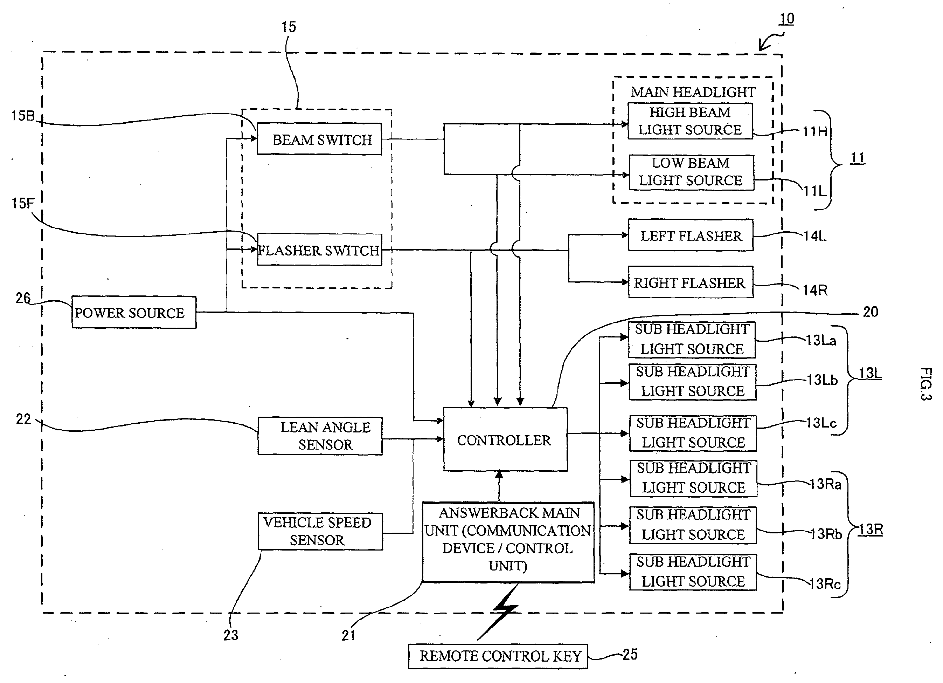

The motorcycle 10 includes a handlebar 12. An operation switch 15 is provided in a left portion of the handlebar 12 with respect to a width direction of the vehicle. The operation switch 15 includes a beam switch 15B and a flasher switch 15F (see FIG. 3). A steering shaft (not shown) is fixed to a center portion of the handlebar 12 with respect to the width direction of the vehicle. The steering shaft extends downward through a headpipe (not shown). A frontfork 17 is provided at a lower end of the steering shaft. A front wheel 16 (see FIG. 2) is rotatably supported at the lower end of the frontfork 17. The headpipe is a member of a vehicle body frame. According to the present teaching, no particular limitation is put on the vehicle body frame, and a conventionally known configuration is adoptable.

A casing 18 is provided ahead of the headpipe having the steering shaft passing therethrough. The casing 18 is arranged in a central part of the motorcycle 10 with respect to the width direction of the vehicle. A main headlight 11 is provided in the casing 18. In this embodiment, the main headlight 11 includes, as a main headlight light source, a high beam light source 11H (running headlight) and a low beam light source 11 L (passing headlight), though not shown in FIG. 1. The high beam light source 11H illuminates an area ahead in front of the motorcycle 10 at a height equal to or above a horizontal plane of the main headlight 11. The low beam light source 11L illuminates an area ahead in front of the motorcycle 10 at a height below the horizontal plane of the main headlight 11. The main headlight 11 includes a reflector 11 a. An upper end edge 11 b of the reflector 11 a is shaped such that a central portion thereof with respect to the width direction of the vehicle protrudes upward when seen from the front side of the motorcycle 10. More specifically, the upper end edge 11 b of the reflector 11 a has a curved shape that is convex upward. Examples of a curve that is convex upward include a circular arc that is convex upward. The curve referred to herein encompasses a line including a combination of line segments. In the reflector 11a, the central portion of the upper end edge 11b with respect to the width direction of the vehicle is located highest when the motorcycle 10 is in an upright state. The upper end edge 11 b of the reflector 11 a is bilaterally symmetric about the central portion thereof with respect to the width direction of the vehicle. The reflector 11 a is arranged within the casing 18.

Within the casing 18, a sub headlight 13 is provided above the main headlight 11. The sub headlight 13 includes two sub headlight units 13L and 13R of variable light distribution type. The sub headlight units 13L and 13R are arranged along the upper end edge 11 b of the reflector 11 a. This achieves a compact arrangement of the main headlight 11 and the sub headlight 13 as a whole. Each of the sub headlight units 13L and 13R is provided at each side with respect to the width direction of the vehicle.

The sub headlight unit 13L includes a plurality of sub headlight light sources 13La, 13Lb, and 13Lc. The sub headlight light sources 13La, 13Lb, and 13Lc are arranged along the upper end edge 11 b of the reflector 11 a in this order from the center toward the lower left with respect to the width direction of the vehicle. Illumination ranges of the sub headlight light sources 13La, 13Lb, and 13Lc are arranged in this order from the center toward the upper right with respect to the width direction of the vehicle. The illumination ranges overlap one another.

The sub headlight unit 13R includes a plurality of sub headlight light sources 13Ra, 13Rb, and 13Rc. The sub headlight light sources 13Ra, 13Rb, and 13Rc are arranged along the upper end edge 11 b of the reflector 11 a in this order from the center toward the lower right with respect to the width direction of the vehicle. Illumination ranges of the sub headlight light sources 13Ra, 13Rb, and 13Rc are arranged in this order from the center toward the upper left with respect to the width direction of the vehicle. The illumination ranges overlap one another.

In this embodiment, as described above, the sub headlight units 13L and 13R are arranged in conformity with the shape of the reflector 11 a of the main headlight 11, and thereby the plurality of sub headlight light sources 13La to 13Lc, 13Ra to 13Rc are arranged sequentially from the upper and inner side with respect to the width direction of the vehicle toward the lower and outer side with respect to the width direction of the vehicle.

The sub headlight light sources 13La and 13Ra that are located highest among the plurality of sub headlight light sources 13La to 13Lc, 13Ra to 13Rc are positioned above the main headlight 11 and overlap the main headlight 11 with respect to the vertical direction. Particularly, in this embodiment, all of the plurality of sub headlight light sources 13La to 13Lc, 13Ra to 13Rc are positioned above the main headlight 11, and overlap the main headlight 11 with respect to the vertical direction. This enables the sub headlight light sources 13La to 13Lc, 13Ra to 13Rc to be kept at relatively high positions. Therefore, occurrence of a situation where the rider feels uncomfortable about a change in the illumination range can be further effectively suppressed.

Optical axes of the sub headlight light sources 13La to 13Lc, 13Ra to 13Rc are fixed, and not moved in accordance with a lean angle. A reflector (not shown) of the sub headlight light source is also fixed, and not moved in accordance with the lean angle. In this embodiment, no particular limitation is put on the sub headlight light source. For example, an LED is adoptable. A mono-focus type light source is also adoptable as the sub headlight light source. As for how the sub headlight light sources 13La to 13Lc, 13Ra to 13Rc are arranged in the motorcycle 10, the above-described arrangement manner is merely an illustrative example of the present teaching. The present teaching is not limited to this example.

The casing 18 has, on its front surface, an outer cover 19 having transparency. The main headlight 11 and the sub headlight 13 are arranged rearward of the outer cover 19, and visible through the outer cover 19.

Flashers 14L and 14R, serving as direction indicators, are provided at both sides of the motorcycle 10 with respect to the width direction of the vehicle. Rearview mirrors 40 are provided in both right and left side portions of the handlebar 12.

Although this embodiment illustrates a case where the main headlight 11 and the sub headlight units 13L and 13R are provided within the casing 18 and covered with the outer cover 19, the present teaching is not limited to this example. It may be also acceptable that, in a vehicle including a front cover, the main headlight 11 and the sub headlight units 13L and 13R are provided to the front cover. Additionally, the outer cover 19 covering the main headlight 11 and the sub headlight units 13L and 13R may be formed as one piece as illustrated in this embodiment, or alternatively may be formed as separate pieces.

FIG. 3 is a block diagram showing a basic configuration concerning the sub headlight units 13L and 13R of the motorcycle 10 shown in FIG. 1.

The operation switch 15 includes the beam switch 15B and the flasher switch 15F. The beam switch 15B is connected to the high beam light source 11 H and the low beam light source 11 L included in the main headlight 11. When the rider operates the beam switch 15B, turn-on/turn-off of the high beam light source 11 H and the low beam light source 11 L is switched in accordance with the operation performed on the beam switch 15B.

The flasher switch 15F is connected to the flashers 14L and 14R. When the rider operates the flasher switch 15F, one of the flashers 14L and 14R is caused to flash in accordance with the operation performed on the flasher switch 15F.

In the motorcycle 10, a lean angle sensor 22 and a vehicle speed sensor 23 are provided. In this embodiment, the lean angle sensor 22 is a gyro sensor that detects the angular velocity about the front-back axis of the motorcycle 10. The lean angle sensor 22 supplies, to a controller 20, a signal indicating the detected angular velocity (roll rate) about the front-back axis. The vehicle speed sensor 23 detects the vehicle speed, and supplies, to the controller 20, a signal indicating the detected vehicle speed. Each time a predetermined timing comes during running, the controller 20 calculates the lean angle of the motorcycle 10 based on the angular velocity about the front-back axis and the vehicle speed.

In this embodiment, the roll rate is integrated over time, and the vehicle speed is used as correction information, thereby calculating the lean angle. However, according to the present teaching, a method for calculating the lean angle is not limited to this example. In the calculation of the lean angle, the vehicle speed is not an essential variable. For calculating the lean angle, a conventionally known method is adoptable. For example, the calculation may be performed based on a static equilibrium equation by using the yaw rate (angular velocity about the vertical axis) and the vehicle speed. The correction information is not limited to the vehicle speed. For example, it may be acceptable to provide a plurality of gyro sensors and G sensors and use values obtained from these sensors and the vehicle speed as the correction information. Instead of the vehicle speed, GPS position information and/or geomagnetic information may be used as the correction information. No particular limitation is put on sensors (detection part) for detecting variables that are available for obtaining the lean angle. An appropriate sensor may be provided in accordance with variables available for the calculation.

The controller 20 includes a memory (not shown). The memory stores, in the form of data, a plurality of reference values (°) to be compared with the lean angle. In this embodiment, the memory stores three reference values. The reference values are different from one another, and associated with the sub headlight light sources 13Ra, 13Rb, and 13Rc, respectively. The reference value increases in the order of the reference values associated with the sub headlight light sources 13Ra, 13Rb, and 13Rc.

When the lean angle of the motorcycle 10 leaning to the left is equal to or larger than the reference value, the controller 20 turns on the sub headlight light source having this reference value associated therewith among the sub headlight light sources 13Ra to 13Rc. On the other hand, when the lean angle is less than the reference value, the controller 20 turns off the sub headlight light source. The reference value increases in the order of the reference values associated with the sub headlight light sources 13Ra, 13Rb, and 13Rc. Therefore, in the course of an increase in the lean angle, the sub headlight light sources 13Ra, 13Rb, and 13Rc are turned on in this order. In the course of a decrease in the lean angle, the sub headlight light sources 13Rc, 13Rb, and 13Ra are turned off in this order.

The sub headlight light sources 13La, 13Lb, and 13Lc also have reference values associated therewith, similarly to the sub headlight light sources 13Ra, 13Rb, and 13Rc.

The sub headlight light sources 13La to 13Lc, 13Ra to 13Rc are connected to the controller 20. A power source 26 is connected to the high beam light source 11 H and the low beam light source 11 L via the beam switch 15B. The power source 26 is connected to the flashers 14L and 14R via the flasher switch 15F. The power source 26 is connected to the controller 20. An answerback main unit 21 is connected to the controller 20. The answerback main unit 21 receives a signal radio wave from a remote control key 25.

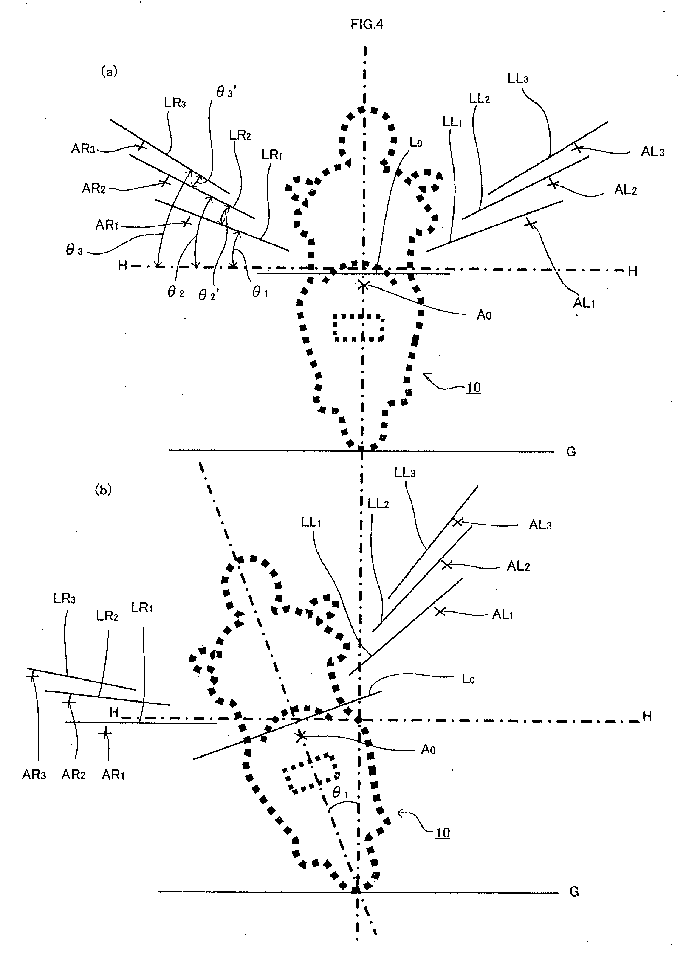

FIG. 4(a) is a view from the rear that coincide with the riders view. Said FIG. 4(a) schematically showing optical axes and cut-off lines of the sub headlight light sources 13La to 13Lc, 13Ra to 13Rc of the motorcycle 10 in the upright state. FIG. 4(b) is a view from the rear schematically showing the optical axes and the cut-off lines of the sub headlight light sources 13La to 13Lc, 13Ra to 13Rc of the motorcycle 10 with a lean attitude.

As shown in FIG. 4(a), the motorcycle 10 stands upright on a flat ground surface G. An optical axis $A_0$ of the low beam light source 11 L is located below a horizontal line H of the low beam light source 11 L. A cut-off line $L_0$ of the low beam light source 11 L is located above the optical axis $A_0$, and located below the horizontal line H of the low beam light source 11 L. The cut-off line $L_0$ extends right and left along the width direction of the vehicle. An illumination range of the low beam light source 11 L covers both right and left sides with respect to the width direction of the vehicle.

The optical axes $AR_1$ to $AR_3$ of the sub headlight light sources 13Ra to 13Rc are located outward in the order of the optical axes $AR_1$ to $AR_3$ with respect to the width direction of the vehicle. The optical axes $AR_1$ to $AR_3$ of the sub headlight light sources 13Ra to 13Rc are located above the optical axis $A_0$ of the low beam light source 11 L.

Inclination angles $\theta_1$ to $\theta_3$ of the cut-off lines $LR_1$ to $LR_3$ of the sub headlight light sources 13Ra to 13Rc increase in the order of the inclination angles $\theta_1$ to $\theta_3$.

The inclination angles $\theta_1$ to $\theta_3$ of the cut-off lines $LR_1$ to $LR_3$ of the sub headlight light sources 13Ra to 13Rc are set to be values increasing at intervals from 0° to $\theta_1$, $\theta_2$, and $\theta_3$ in this order. The interval between 0° and $\theta_1$ is $\theta_1$. When the interval between $\theta_2$ and $\theta_1$ is defined as $\theta_2'$ and the interval between $\theta_3$ and $\theta_2$ is defined as $\theta_3'$, the intervals $\theta_1$, $\theta_2'$, and $\theta_3'$ satisfy the relationship of $\theta_1=\theta_2'=\theta_3'$. In other words, the intervals ($\theta_1$, $\theta_2'$, $\theta_3'$) are regular intervals. Here, according to the present teaching, the intervals are not limited to this example. For example, the relationship among the intervals $\theta_1$, $\theta_2'$, and $\theta_3'$ may be $\theta_1>\theta_2'>\theta_3'$.

In this embodiment, the reference values (°) for turning on the sub headlight light sources 13Ra, 13Rb, and 13Rc are set to be $\theta_1$, $\theta_2$, and $\theta_3$, respectively. Accordingly, when the motorcycle 10 is running in the upright state ($\theta=0$), the sub headlight light sources 13La to 13Lc, 13Ra to 13Rc are not turned on. As shown in FIG. 4(b), when the motorcycle 10 is inclined to one side (to the left in FIG. 4) with respect to the width direction of the vehicle so that the lean angle reaches $\theta_1$, it means that the lean angle of the motorcycle 10 reaches the reference value. Therefore, the sub headlight light source 13Ra arranged at the side (right side) opposite to the side to which the motorcycle 10 is leaning is turned on. At this time, the cut-off line $LR_1$ is horizontal. Then, when the lean angle reaches $\theta_2$ along with an increase in the lean angle, the sub headlight light source 13Rb is turned on, with the cut-off line $LR_2$ being horizontal at this time. Then, when the lean angle reaches $\theta_3$ along with an increase in the lean angle, the sub headlight light source 13Rc is turned on, with the cut-off line $LR_3$ being horizontal at this time.

The relationship between the inclination angle ($\theta_1$ to $\theta_3$) of the cut-off line ($LR_1$ to $LR_3$) of each sub headlight light source (13Ra to 13Rc) and the reference value set for this sub headlight light source (13Ra to 13Rc) is not limited to this example. These values (angles) may be different from each other. Here, a state where these values are the same encompasses a state where these values are substantially the same.

The cut-off lines $LR_1$ to $LR_3$ of the sub headlight light sources 13Ra to 13Rc define the upper end edges of the illumination ranges of the sub headlight light sources 13Ra to 13Rc, respectively, and therefore the illumination ranges of the sub headlight light sources 13Ra to 13Rc are located below the cut-off lines $LR_1$ to $LR_3$ of the sub headlight light sources 13Ra to 13Rc, though not shown in FIG. 4. Accordingly, in the upright state of the vehicle each of the illumination ranges of the sub headlight light sources 13Ra to 13Rc contains a space above the horizontal line H, and their locations are higher in ascending order of the illumination range of the sub headlight light source 13Ra, the illumination range of the sub headlight light source 13Rb, and the illumination range of the sub headlight light source 13Rc. The illumination ranges of the sub headlight light sources 13Ra to 13Rc are located at the left side with respect to the width direction of the vehicle.

Except for whether the sub headlight light sources are provided at the right side or the left side of the symmetry, the sub headlight light sources 13La to 13Lc are identical to the sub headlight light sources 13Ra to 13Rc described above. Therefore, a description thereof will be omitted.

Here, according to the present teaching, the optical axis is a straight line that passes through a light source and the center of a maximum illuminance portion of emitted light. The center of the maximum illuminance portion of the emitted light can be identified by emitting light from a light source to a screen that is placed ahead of the light source. This screen illuminance test can be implemented by a method specified in JIS D1619. Also, the cut-off line and the illumination range having the predetermined illuminance can be identified based on a result (such as an isolux distribution map) of the screen illuminance test mentioned above. The cut-off line and the illumination range having the predetermined illuminance in a plan view can be identified based on a road-surface light distribution that is obtained by converting the result of the screen illuminance test mentioned above into the road-surface light distribution. The conversion into the road-surface light distribution can be implemented by a conventionally known method. To be specific, through commonly-used drawing and geometric calculation, conversion from a screen illuminance value into a road-surface illuminance value can be performed. In such a case, the following expression (I) is usable. In the following expression (I), D represents a light source, E represents a point on a road surface, and F represents a point of intersection at which the screen placed between D and E intersects with a straight line connecting D to E.

$$\text{Road-Surface Illuminance (Lx)} = \text{Screen Illuminance (Lx)} \times [(\text{Distance between D and F (m)}) / (\text{Distance between D and E (m)})]^2 \qquad \dots \text{(I)}$$

Next, a manner in which the sub headlight light sources 13La to 13Lc, 13Ra to 13Rc are turned on will be described.

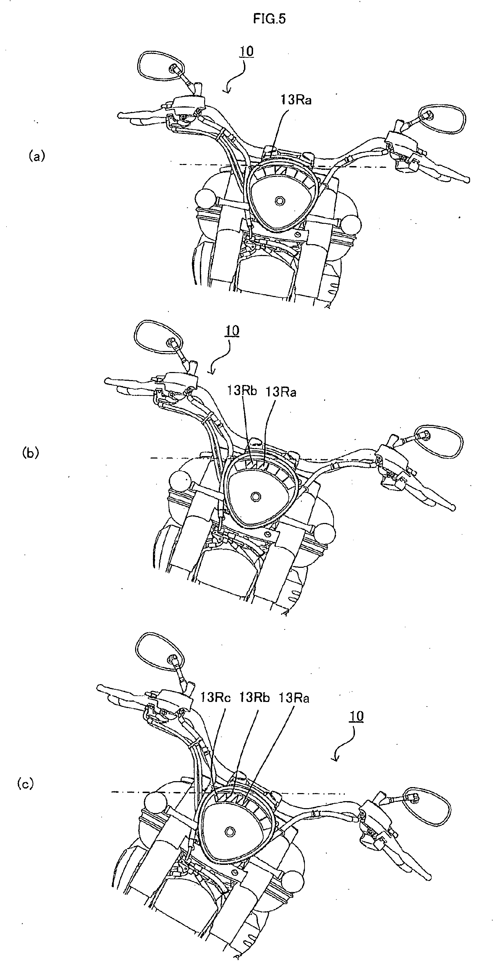

FIGS. 5(a) to 5(c) are diagrams for explaining an example of a process in which the plurality of sub headlight light sources 13Ra to 13Rc are sequentially turned on in accordance with an increase in the lean angle of the motorcycle 10 leaning to the left.

In the course of an increase in the lean angle of the motorcycle 10 leaning to the left, firstly, when the lean angle takes a value equal to or greater than the smallest reference value, the sub headlight light source 13Ra arranged uppermost and innermost is turned on (FIG. 5(a)). At this time, the sub headlight light source 13Ra that is currently turned on is located highest among the sub headlight light sources 13La to 13Lc, 13Ra to 13Rc.

Then, when the lean angle takes a value equal to or greater than the second smallest reference value, the sub headlight light source 13Rb arranged second uppermost and second innermost is turned on (FIG. 5(b)). At this time, the sub headlight light source 13Rb that is currently turned on is located highest among the sub headlight light sources 13La to 13Lc, 13Ra to 13Rc.

Then, when the lean angle takes a value equal to or greater than the greatest reference value, the sub headlight light source 13Rc arranged lowermost and outermost is turned on (FIG. 5(c)). At this time, the sub headlight light source 13Rc that is currently turned on is located highest among the sub headlight light sources 13La to 13Lc, 13Ra to 13Rc.

In this manner, in this embodiment, at a time when a sub headlight light source is turned on, this sub headlight light source is located highest among the plurality of sub headlight light sources. This enables the sub headlight light sources to be kept at relatively high positions at times when these sub headlight light sources are turned on.

The same is true for a manner in which the sub headlight light sources 13La to 13Lc are turned on in the course of an increase in the lean angle of the motorcycle 10 leaning to the right.

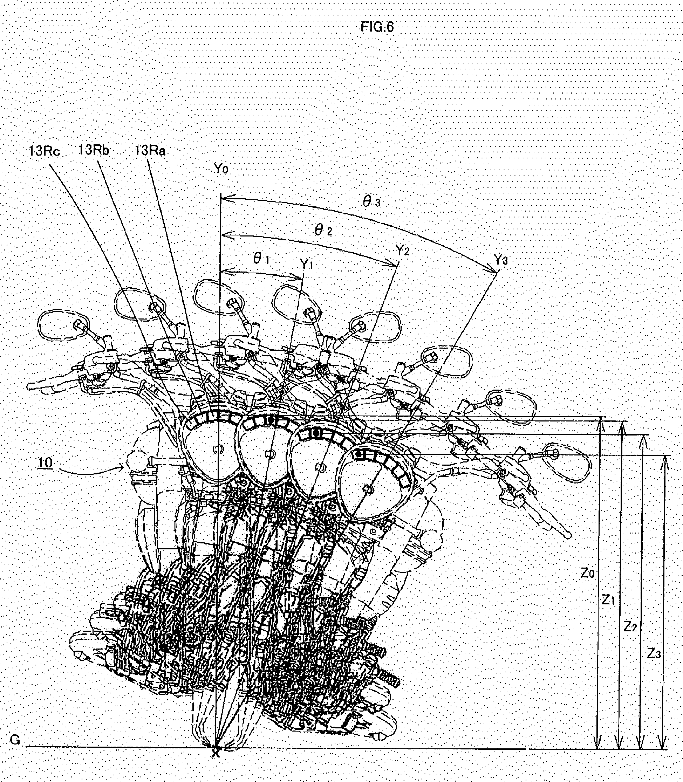

FIG. 6 is a front elevational view schematically showing the motorcycle 10 during the process in which the plurality of sub headlight light sources 13Ra to 13Rc are turned on in accordance with an increase in the lean angle of the motorcycle 10 leaning to the left.

In FIG. 6, the motorcycle 10 leans to the left while the front wheel 16 (see FIG. 2) is grounded at a position X on the ground surface G.

In the upright state, a center line $Y_0$ of the motorcycle 10 is perpendicular to the ground surface G. The center

line $Y_0$ is a line extending in the vertical direction and passing through the center of the motorcycle 10 in the upright state with respect to the width direction of the vehicle. The reference sign $Z_0$ indicates the height of the sub headlight unit 13R (the height of a point of intersection at which a circular arc defined by the sub headlight light sources 13La to 13Lc, 13Ra to 13Rc intersects with the center line $Y_0$).

When the lean angle of the motorcycle 10 leaning to the left reaches $\theta_1$, the sub headlight light source 13Ra is turned on. At this time, the center line $Y_0$ has shifted to a center line $Y_1$. At this stage, the height of the sub headlight light source 13Ra being turned on is $Z_1$.

When the lean angle of the motorcycle 10 leaning to the left reaches $\theta_2$, the sub headlight light source 13Rb is turned on. At this time, the center line $Y_1$ has shifted to the center line $Y_2$. At this stage, the height of the sub headlight light source 13Rb being turned on is $Z_2$.

When the lean angle of the motorcycle 10 leaning to the left reaches $\theta_3$, the sub headlight light source 13Rc is turned on. At this time, the center line $Y_2$ has shifted to the center line $Y_3$. At this stage, the height of the sub headlight light source 13Rc being turned on is $Z_3$.

In this manner, as shown in FIG. 6, the height $Z_1$, $Z_2$, $Z_3$ of the sub headlight light source 13Ra to 13Rc being turned on becomes lower in accordance with an increase in the lean angle of the motorcycle 10 leaning to the left ($Z_0 > Z_1 > Z_2 > Z_3$).

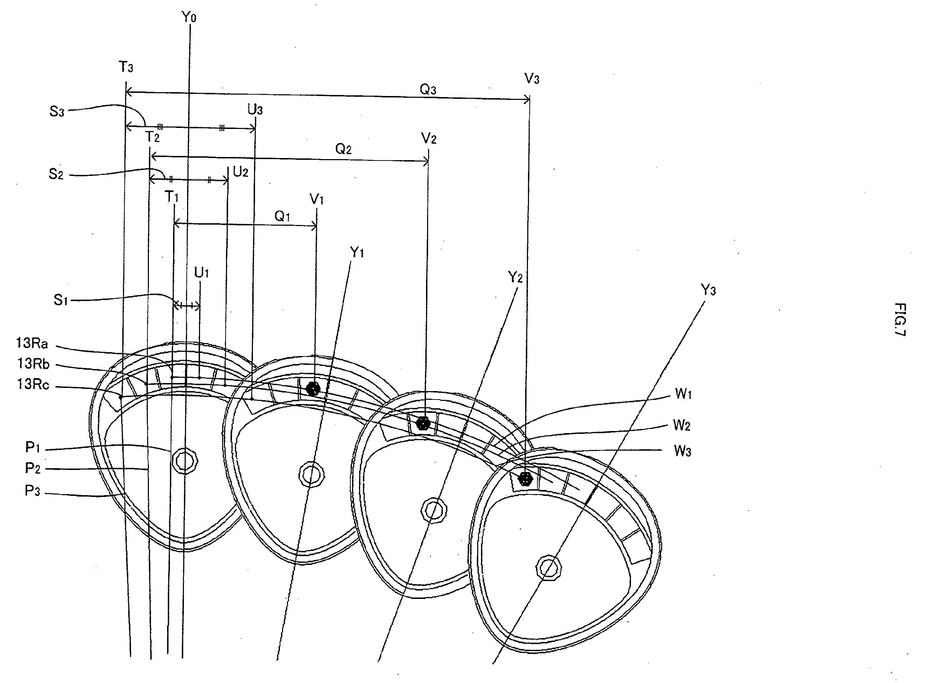

Here, the sub headlight light source (for example, 13Rb) configured to be turned on upon a larger lean angle is located lower and outer (to the right) with respect to the width direction of the vehicle than the sub headlight light source (for example, 13Ra) configured to be turned on upon a smaller lean angle. Therefore, differences in the heights $Z_1$, $Z_2$, and $Z_3$ are small. This point will be detailed with reference to FIG. 7.

FIG. 7 is a diagram showing a part of FIG. 6 on an enlarged scale. In FIG. 7, only a light unit is shown, and the other parts of the vehicle are not shown.

When the motorcycle 10 leans to the left from the upright state, the sub headlight light sources 13Ra, 13Rb, and 13Rc are moved in accordance with an increase in the lean angle of the motorcycle 10. Trajectories of movement of the sub headlight light sources 13Ra, 13Rb, and 13Rc are in the shape of circular arcs $W_1$, $W_2$, and $W_3$, respectively. The circular arcs $W_1$, $W_2$, and $W_3$, which are centered at the grounding position X (see FIG. 6), have radii $P_1$, $P_2$, and $P_3$, respectively.

In the upright state, the sub headlight light sources 13Ra, 13Rb, and 13Rc are arranged in this order from the upper side, and the radii $P_1$, $P_2$, and $P_3$ satisfy the relationship of $P_1 > P_2 > P_3$.

The reference signs $T_1$, $T_2$, and $T_3$ indicate positions of the sub headlight light sources 13Ra, 13Rb, and 13Rc with respect to the width direction of the vehicle when the motorcycle 10 is in the upright state. The sub headlight light sources 13Ra, 13Rb, and 13Rc are arranged in this order from the inner side toward the outer (right) side with respect to the width direction of the vehicle. Accordingly, distances from $Y_0$ to $T_1$, $T_2$, and $T_3$ with respect to the width direction of the vehicle satisfy the relationship of $T_3 > T_2 > T_1$.

When the motorcycle 10 leans to the left from the upright state so that the lean angle thereof increases, the sub headlight light sources 13Ra, 13Rb, and 13Rc are moved upward from the positions they have taken in the upright state, and additionally moved to the left with respect to the width direction of the vehicle. The sub headlight light sources 13Ra, 13Rb, and 13Rc come to the highest positions in the circular arcs $W_1$, $W_2$, and $W_3$, respectively, when they reach the position of the center line $Y_0$ in the upright state. Distances from the positions of the sub headlight light sources 13Ra, 13Rb, and 13Rc taken when the motorcycle 10 is in the upright state to the highest positions are $T_1$, $T_2$ and, $T_3$, respectively ($T_3 > T_2 > T_1$).

The sub headlight light sources 13Ra, 13Rb, and 13Rc located on the center line $Y_0$ are, in accordance with an increase in the lean angle, moved to the left. When the sub headlight light sources 13Ra, 13Rb, and 13Rc are moved by the distances equal to $T_1$, $T_2$, and $T_3$, respectively, the height positions of the sub headlight light sources 13Ra, 13Rb, and 13Rc are returned to positions $U_1$, $U_2$, and $U_3$, which are equal to the height positions thereof in the upright state. That is, while the sub headlight light sources 13Ra, 13Rb, and 13Rc are moving from $T_1$ to $U_1$, from $T_2$ to $U_2$, and from $T_3$ to $U_3$, respectively, the heights of the sub headlight light sources 13Ra, 13Rb, and 13Rc are kept equal to or higher than the heights thereof in the upright state. When a distance between $T_1$ and $U_1$, a distance between $T_2$ and $U_2$, and a distance between $T_3$ and $U_3$ are defined as $S_1$, $S_2$, and $S_3$, respectively, a relationship of $S_3 > S_2 > S_1$ is satisfied.

When the lean angle reaches $\theta_1$, the sub headlight light source 13Ra is turned on. At this time, the position of the sub headlight light source 13Ra is $V_1$, and the center line of the motorcycle 10 is $Y_1$ (see FIG. 6). A distance by which the sub headlight light source 13Ra is moved from its upright-state position ($T_1$) to its turned-on-state position ($V_1$) is $Q_1$.

When the lean angle reaches $\theta_2$, the sub headlight light source 13Rb is turned on. At this time, the position of the sub headlight light source 13Rb is $V_2$, and the center line of the motorcycle 10 is $Y_2$ (see FIG. 6). A distance by which the sub headlight light source 13Rb is moved from its upright-state position ($T_2$) to its turned-on-state position ($V_2$) is $Q_2$.

When the lean angle reaches $\theta_3$, the sub headlight light source 13Rc is turned on. At this time, the position of the sub headlight light source 13Rc is $V_3$, and the center line of the motorcycle 10 is $Y_3$ (see FIG. 6). A distance by which the sub headlight light source 13Rc is moved from its upright-state position ($T_3$) to its turned-on-state position ($V_3$) is $Q_3$.

The distances $Q_1$, $Q_2$, and $Q_3$ by which the sub headlight light sources 13Ra, 13Rb, and 13Rc are moved satisfy a relationship of $Q_3>Q_2>Q_1$. That is, as the lean angle at which the sub headlight light source 13Ra, 13Rb, 13Rc is turned on is larger ($\theta_3>\theta_2>\theta_1$), the distance of movement from the upright-state position to the turned-on-state position with respect to the width direction of the vehicle is longer ($Q_3>Q_2>Q_1$). The distance of downward movement of the sub headlight light source 13Ra, 13Rb, 13Rc increases as the movement distance $Q_1$, $Q_2$, $Q_3$ is longer. However, the sub headlight light source 13Ra, 13Rb, 13Rc having a longer movement distance $Q_1$, $Q_2$, $Q_3$ is kept equal to or higher than an upright-state height thereof over a longer distance ($Q_3>Q_2>Q_1$ and $S_3>S_2>S_1$). This reduces differences in the heights $Z_1$, $Z_2$, and $Z_3$ of the sub headlight light sources 13Ra, 13Rb, and 13Rc at times when they are turned on, to allow them to be turned on at relatively high positions.

Moreover, as the radius $P_1$, $P_2$, $P_3$ of the circular arc $W_1$, $W_2$, $W_3$ is larger, the width of downward movement of the sub headlight light source 13Ra, 13Rb, 13Rc along with an increase in the lean angle is larger. However, in this embodiment, under a situation that satisfies $Q_3>Q_2>Q_1$ and $S_3>S_2>S_1$, the sub headlight light sources 13Ra, 13Rb, and 13Rc are turned on sequentially from the one having a larger radius $P_1$, $P_2$, $P_3$ of the circular arc $W_1$, $W_2$, $W_3$. This can also reduce the differences in the heights $Z_1$, $Z_2$, and $Z_3$ of the sub headlight light sources 13Ra, 13Rb, and 13Rc at times when they are turned on, to allow them to be turned on at relatively high positions.

As a result, occurrence of a situation where the rider feels uncomfortable about a change in the illumination range can be suppressed during the process in which the plurality of sub headlight light sources 13Ra to 13Rc are sequentially turned on along with an increase or decrease in the lean angle of the motorcycle 10. Although this embodiment illustrates a case where the sub headlight light sources 13Ra, 13Rb, and 13Rc are arranged in this order from the upper side and the radii $P_1$, $P_2$, and $P_3$ satisfy a relationship of $P_1>P_2>P_3$, the present teaching is not limited to this example. In another possible example, the radii $P_1$, $P_2$, and $P_3$ may be equal to one another ($P_1=P_2=P_3$). In such a case, the sub headlight light sources 13Ra, 13Rb, and 13Rc are arranged on the same one circular arc centered at the position X (see FIG. 6) where the front wheel 16 is grounded. This can reduce the differences in the heights of the sub headlight light sources 13Ra, 13Rb, and 13Rc at times when they are turned on. Alternatively, it may be also acceptable that the sub headlight light sources 13Ra, 13Rb, and 13Rc are arranged in this order from the upper side and the radii $P_1$, $P_2$, and $P_3$ satisfy a relationship of $P_1<P_2<P_3$. In this case as well, by turning on the sub headlight light sources 13Ra, 13Rb, and 13Rc sequentially from the one located uppermost and innermost with respect to the width direction of the vehicle, the sub headlight light sources 13Ra, 13Rb, and 13Rc can be turned on at relatively high positions, and the differences in the heights of the sub headlight light sources 13Ra, 13Rb, and 13Rc at times when they are turned on can be reduced.

Furthermore, the plurality of sub headlight light sources 13Ra to 13Rc, 13La to 13Lc are arranged on a circular arc whose center is located below the plurality of sub headlight light sources 13Ra to 13Rc, 13La to 13Lc. In this embodiment, though not shown, the center of the circular arc is located in the vicinity of the main headlight 11 in FIG. 1. This can further reduce the differences in the heights of the sub headlight light sources 13Ra to 13Rc, 13La to 13Lc at times when they are turned on, to thereby enable more effective suppression of occurrence of uncomfortable feeling. A manner of arrangement of the sub headlight light sources according to the present teaching is not limited to the above-described example.

It is preferable that the center of the circular arc is located on the center line $Y_0$ (see FIG. 6) of the motorcycle 10. This is because it enables the sub headlight light sources 13Ra to 13Rc, 13La to 13Lc to be turned on evenly across the right and left sides, thus achieving more effective suppression of occurrence of uncomfortable feeling.

It is preferable that the center of the circular arc on which the plurality of sub headlight light sources are arranged is located at the position X (see FIG. 6) where the front wheel 16 of the motorcycle 10 is grounded. In other words, it is preferable that the curvature of the circular arc on which the plurality of sub headlight light sources are arranged is equal to the curvature of the circular arcs that serve as paths along which the sub headlight light sources are moved in accordance with a change in the lean angle. This can further reduce the differences in the heights of the sub headlight light sources at times when they are turned on. Here, a state where the curvatures are equal means a state where they are substantially equal. It is also preferable that the curvature of the circular arc on which the plurality of sub headlight light sources are arranged is larger than the curvature of the circular arcs that serve as paths along which the sub headlight light sources are moved in accordance with a change in the lean angle. This is because it can further reduce the differences in the heights of the sub headlight light sources at times when they are turned on while reducing the widths of the sub headlight units with respect to the width direction of the vehicle.

In the above-described embodiment, the sub headlight unit 13L includes the sub headlight light sources 13La to 13Lc positioned at the left side, and the sub headlight unit 13R includes the sub headlight light sources 13Ra to 13Rc positioned at the right side. However, the present teaching is not limited to this example. It may be also possible that one sub headlight unit includes sub headlight light sources positioned at both sides. In such a case, one sub headlight unit is provided in the motorcycle 10. Additionally, a sub headlight unit may be integrated with a main headlight.

The above-described embodiment illustrates a case where the number of sub headlight light sources that illuminate one side with respect to the width direction of the vehicle is three. However, according to the present teaching, it suffices that the number of sub headlight light sources that illuminate one side with respect to the width direction of the vehicle is two or more, and not necessarily limited to three.

The lean angle sensor 22 and the vehicle speed sensor 23 correspond to a detection part for detecting variables available for obtaining the lean angle of the motorcycle 10. Although the detection part includes the lean angle sensor 22 and the vehicle speed sensor 23 in this embodiment, the present teaching is not limited to this example. For example, the detection part may include the lean angle sensor 22 while not including the vehicle speed sensor 23. The controller 20 corresponds to a control part of the present teaching. However, a hardware configuration of the present teaching is not limited to this example. The control part determines whether or not the lean angle of the motorcycle 10 has reached the reference value based on the variables detected by the detection part. At this time, it is not always necessary that the control part calculates the lean angle. Details of processing performed in the control part are not particularly limited. For example, it may be possible that a memory provided in the controller 20 serving as the control part stores, in the form of data, a table in which the angular velocity (roll rate) and the vehicle speed are associated with a result of whether or not the lean angle has reached the reference value. In this case, the control part refers to the table based on the angular velocity and the vehicle speed, and thereby can determine whether or not the lean angle has reached the reference value without calculating the lean angle.

In this embodiment, the lean angle is the angle of inclination of the vehicle body to the inner side of a curve relative to the upright state (vertical direction). However, the present teaching is not limited to this example. The lean angle may be the angle of inclination of the vehicle body to the inner side of a curve relative to a direction perpendicular to a road surface. As a method and a device for measuring the angle of inclination of the vehicle body to the inner side of a curve relative to the direction perpendicular to the road surface, conventionally known ones are adoptable.

This embodiment illustrates a case where the sub headlight unit is a member separate from the control part (controller 20) and the detection part (the lean angle sensor 22 and the vehicle speed sensor 23). However, the present teaching is not limited to this example. The sub headlight unit may include at least one of the control part, a communication part, and the detection part.

This embodiment illustrates a case where the sub headlight light source is turned on in accordance with the lean angle. Instead, according to the present teaching, the sub headlight light source may be configured such that a turn-on function in accordance with the lean angle is manually activated or deactivated. In this case as well, the sub headlight light source is turned on not manually but in accordance with the lean angle. In the flasher, on the other hand, flashing/turn-off is manually switched. In this manner, the sub headlight light source is different from the flasher and the main headlight.

The sub headlight light source may be also configured such that an instruction for turn-on or turn-off is manually inputted. In such a case, when the instruction is not inputted, the sub headlight light source is turned on in accordance with the lean angle, while when the instruction is inputted, turn-on or turn-off is performed in accordance with the instruction. In this case as well, the sub headlight light source is different from the flasher, in that a function of turning on the sub headlight light source in accordance with the lean angle is provided.

According to the present teaching, turning on the sub headlight light source in accordance with the lean angle is not necessarily limited to directly changing the sub headlight light source from a turn-off state to a turn-on state in accordance with the lean angle, but may also include gradually changing the sub headlight light source from the turn-off state to the turn-on state in accordance with the lean angle. Here, gradually changing the sub headlight light source from the turn-off state to the turn-on state in accordance with the lean angle includes continuously changing the sub headlight light source from the turn-off state to the turn-on state and stepwise changing the sub headlight light source from the turn-off state to the turn-on state. The turn-on state is not limited to a full light turn-on state at the rated power level, but may also include a dimmed light turn-on state in which the output is controlled to less than the output in the full light turn-on state. In the full light turn-on state, the turn-on may be performed with an output higher than the rated power (for example, with the maximum output). It is to be noted that the output in the dimmed light turn-on state is higher than the output in the turn-off state. Turning on the sub headlight light source in accordance with the lean angle may include changing the brightness of the sub headlight light source to a predetermined brightness higher than the brightness in the turn-off state in accordance with the lean angle.

In other words, turning on the sub headlight light source in accordance with the lean angle is not limited to the following case (i), but may also include the following cases (ii) to (iv).

(i) The sub headlight light source is directly or gradually changed from the turn-off state to the full light turn-on state in accordance with the lean angle.

(ii) The sub headlight light source is directly or gradually changed from the turn-off state to the dimmed light turn-on state in accordance with the lean angle.

(iii) The sub headlight light source is directly or gradually changed from the dimmed light turn-on state to the full light turn-on state in accordance with the lean angle.

(iv) The sub headlight light source is directly or gradually changed from a first dimmed light turn-on state to a second dimmed light turn-on state in accordance with the lean angle (the brightness in the second dimmed light turn-on state is higher than the brightness in the first dimmed light turn-on state).

Here, in a case where the sub headlight light source is a light source (for example, an LED) whose brightness is controlled under a pulse width modulation control, turning on the sub headlight light source in accordance with the lean angle may include continuously or gradually changing the duty cycle of the sub headlight light source from 0 to a value greater than 0 in accordance with the lean angle.

In the description of this embodiment, the sub headlight light source is turned on in accordance with the lean angle. Here, the sub headlight light source is turned on in accordance with the lean angle because the sub headlight light source functions mainly as a light for ensuring the field of view of the rider of the vehicle. Therefore, in a well-lit situation, for example, in daytime, the sub headlight light source may not necessarily be turned on in accordance with the lean angle.

The embodiment also discloses a method for controlling a sub headlight 13 of a vehicle that leans into turns, the sub headlight unit including a plurality of sub headlight light sources 13La,13Lb,13Lc,13Ra,13Rb,13Rc that illuminate, at the same side as the side to which the vehicle is leaning, an area ahead and outward of the vehicle with respect to a width direction of the vehicle. The plurality of sub headlight light sources 13La,13Lb,13Lc,13Ra,13Rb,13Rc being arranged such that, under a state where the vehicle is upright, each of them is positioned at the side opposite to the side to which the vehicle leans for turning on the plurality of sub headlight light sources 13La,13Lb,13Lc,13Ra,13Rb, 13Rc. The method comprises: turning on the plurality of sub headlight light sources (13La,13Lb,13Lc,13Ra,13Rb,13Rc) in accordance with different lean angles of the vehicle, and turning on upon a large lean angle of the vehicle the sub headlight light source being located lower and outer at the side opposite to the side to which the vehicle is leaning with respect to the width direction of the vehicle than the sub headlight light source configured to be turned on upon a small lean angle of the vehicle.

Moreover, when any of the plurality of sub headlight light sources 13La,13Lb,13Lc,13Ra,13Rb,13Rc is turned on, said sub headlight light source is located highest among the plurality of sub headlight light sources 13La,13Lb,13Lc, 13Ra,13Rb,13Rc.

Furthermore, the sub headlight light source that is located highest when the vehicle is upright is positioned above a main headlight 11 provided in the vehicle, the main headlight 11 illuminate an area ahead in front of the vehicle.

The teaching as illustrated by the embodiment also discloses sub headlight 13 for use in a vehicle that leans into turns, the sub headlight 13 including a plurality of sub headlight light sources 13La,13Lb,13Lc,13Ra,13Rb,13Rc adapted to illuminate, at the same side as the side to which the vehicle is leaning, an area ahead and outward of the vehicle with respect to a width direction of the vehicle. The plurality of sub headlight light sources 13La,13Lb,13Lc,13Ra, 13Rb,13Rc are arranged in pairs 13La,13Ra;13Lb,13Rb;13Lc,13Rc symmetrically with regard to a center plan and spaced at different distances perpendicular from said center plan. In reference to the vehicle, said center plan contains the center line $Y_0$ that is perpendicular with the ground surface G when the vehicle is in the upright state as illustrated in the FIG. 6. The controller 20 is adapted to determine a change in inclination angle of said center plan with regard to a reference plan and to control the sub headlight light sources 13La, 13Lb, 13Lc, 13Ra, 13Rb, 13Rc according to the determined change in inclination angle.

According to an embodiment, said controller is attached to the vehicle body and connected with the sub headlight by means of individual wiring. Alternatively, the wiring for connection is integrated into the wiring of the entire wiring of the light unit.

According to a further embodiment, said controller is integrated into a further controller, especially integrated into the controller of entire light unit.

According to a further embodiment, said controller is attached to the sub headlight, especially integrated into a sub headlight body to form a unit. In said embodiment, the connecting with the sub headlight light sources is provided by short wiring.

According to said embodiments, means for determining a change in inclination angle, like a lean angle sensor, is attached to the vehicle body or attached to the sub headlight and connect with the controller. Alternatively, said means for determining a change in inclination angle is integrated with the controller.

In reference to the vehicle, the reference plan coincide with a ground surface G on which the vehicle stands as illustrated in the FIG. 6. The controller 20 is adapted to turn on at least one of the sub headlight light sources 13La, 13Lb, 13Lc, 13Ra, 13Rb, 13Rc arranged on one side of said center plan being the side opposite to the side to which the change in inclination angle of the center plan with regard to a reference plan G is determined. The controller 20 is adapted to turn on the sub headlight light source arranged lower and outer on the one side of the center plan upon a large lean angle than the sub headlight light source turned on upon a small lean angle.

In consideration of the sub headlight 13 mounted on a vehicle that leans into turns the center plan coincide with a centre plan of the vehicle extending in fore-aft direction and under a state where the vehicle is upright a position of the center plan is perpendicular to ground surface G. Accordingly, the controller 20 is adapted to determine an actual position of the centre plan with regard to the position of the center plan under the state where the vehicle is upright in consideration of the determined change in inclination angle of the center plan with regard to the reference plan. In an embodiment of the vehicle, the lean angle of the vehicle is determined and the actual position of the centre plan is determined on bases of said lean angle, especially said lean angle of the vehicle is directly used for controlling the sub headlight light.

Examples of the actual position of the centre plan are illustrated by means of the shifted center lines $Y_1, Y_2, Y_3$ in the FIGs. 6 and 7. The controller 20 is adapted to turn on at least one of the sub headlight light sources 13La,13Lb, 13Lc,13Ra,13Rb,13Rc arranged on one side of the center plan being the side opposite to the side to which to which the vehicle is leaning.

The teaching as illustrated by the embodiment also discloses a method for controlling a sub headlight 13 of a vehicle that leans into turns, the sub headlight 13 including a plurality of sub headlight light sources 13La,13Lb,13Lc, 13Ra,13Rb,13Rc adapted to illuminate, at the same side as the side to which the vehicle is leaning, an area ahead and outward of the vehicle with respect to a width direction of the vehicle. The plurality of sub headlight light sources 13La, 13Lb,13Lc,13Ra,13Rb,13Rc being arranged in pairs 13La,13Ra;13Lb,13Rb;13Lc,13Rc symmetrically with regard to a center plan and spaced at different distances perpendicular from said center plan. The method comprises: determining an angle to which the vehicle is leaning, and turning on at least one of the sub headlight light sources 13La,13Lb,13Lc, 13Ra,13Rb,13Rc according to the angle to which vehicle is leaning, wherein the sub headlight light source 13La,13Lb, 13Lc,13Ra,13Rb,13Rc being turned on is arranged on one side of the center plan being the side opposite to the side to which to which the vehicle is leaning.

[DESCRIPTION OF THE REFERENCE SIGNS]

    10 motorcycle (vehicle that leans into turns)
    11 main headlight
    11 H high beam light source (main headlight light source)
    11 L low beam light source (main headlight light source)
    12 handlebar
    13 sub headlight
    13L, 13R sub headlight unit
    13La, 13Lb, 13Lc, 13Ra, 13Rb, 13Rc sub headlight light source
    14L, 14R flasher
    15 operation switch
    16 front wheel
    17 frontfork
    18 casing
    20 controller
    22 lean angle sensor
    23 vehicle speed sensor
    40 rearview mirror

**Claims**

1. A vehicle that leans into turns with an attitude leaning to the inner side of a curve and comprises a sub headlight system and a main headlight (11) being configured to illuminate an area ahead in front of the vehicle, the sub headlight system comprising:

    two sub headlight units (13L, 13R) adapted to illuminate, at the same side as the side to which the vehicle is leaning, an area ahead and outward of the vehicle with respect to a width direction of the vehicle, the two sub headlight units (13L, 13R) each being provided at each side with respect to the width direction of the vehicle;
    a detection part adapted to detect a variable available for obtaining the lean angle of the vehicle; and
    a control part adapted to turn on the plurality of sub headlight light sources (13La,13Lb,13Lc,13Ra,13Rb,13Rc) in accordance with the lean angle of the vehicle obtained based on a result of detection by the detection part, wherein
    the main headlight (11) including a reflector (11 a) having an upper end edge (11b) shaped such that a central portion thereof with respect to the width direction of the vehicle protrudes upward when seen from the front side of the vehicle,

**characterized in that**

each of two sub headlight units (13L, 13R) including a plurality of sub headlight light sources (13La,13Lb,13Lc, 13Ra,13Rb,13Rc) adapted to illuminate, at the same side as the side to which the vehicle is leaning, an area ahead and outward of the vehicle with respect to a width direction of the vehicle,

the plurality of sub headlight light sources (13La,13Lb,13Lc,13Ra,13Rb,13Rc) being arranged such that, under a state where the vehicle is upright, each of them is positioned at the side opposite to the side to which the vehicle leans for turning on the plurality of sub headlight light sources (13La,13Lb,13Lc,13Ra,13Rb,13Rc), and the plurality of sub headlight light sources (13La,13Lb,13Lc,13Ra,13Rb,13Rc) being configured to be turned on in accordance with different lean angles of the vehicle when the lean angle of the vehicle increases,

the sub headlight light source configured to be turned on upon a large lean angle of the vehicle being located lower and outer at the side opposite to the side to which the vehicle is leaning with respect to the width direction of the vehicle than the sub headlight light source configured to be turned on upon a small lean angle of the vehicle, wherein the two sub headlight units (13L, 13R) being arranged along the upper end edge (11 b), wherein the sub headlight light source that is located highest when the vehicle is upright is positioned above the main headlight (11).

2. A vehicle according to claim 1, **characterized in that** when seen from the front side of the vehicle, the plurality of sub headlight light sources (13La,13Lb,13Lc,13Ra,13Rb,13Rc) are arranged in the shape of a circular arc whose center is located below the plurality of sub headlight light sources (13La,13Lb,13Lc,13Ra,13Rb,13Rc).

3. A vehicle according to claim 2, **characterized in that** the plurality of sub headlight light sources (13La,13Lb,13Lc, 13Ra,13Rb,13Rc) are arranged so that the center of the circular arc is located at a position where a front wheel (16) of the vehicle is grounded when seen from the front side of the vehicle.

4. A vehicle according to any one of claims 1 to 3, **characterized in that** the plurality of sub headlight light sources (13La,13Lb,13Lc,13Ra,13Rb,13Rc) are arranged so that when any of the plurality of sub headlight light sources (13La,13Lb,13Lc,13Ra,13Rb,13Rc) is turned on by the control part, said sub headlight light source is located highest among the plurality of sub headlight light sources (13La,13Lb,13Lc,13Ra,13Rb,13Rc).

5. Method for controlling a sub headlight (13) included in a vehicle that leans into turns with an attitude leaning to the inner side of a curve and comprises a main headlight (11) being configured to illuminate an area ahead in front of the vehicle,

the sub headlight (13) including two sub headlight units (13L, 13R) each including a plurality of sub headlight light sources (13La, 13Lb, 13Lc, 13Ra, 13Rb, 13Rc) that illuminate, at the same side as the side to which the vehicle is leaning, an area ahead and outward of the vehicle with respect to a width direction of the vehicle, the two sub headlight units (13L, 13R) each being provided at each side with respect to the width direction of the vehicle,

the plurality of sub headlight light sources (13La,13Lb,13Lc,13Ra,13Rb,13Rc) being arranged such that, under a state where the vehicle is upright, each of them is positioned at the side opposite to the side to which the vehicle leans for turning on the plurality of sub headlight light sources (13La,13Lb,13Lc,13Ra,13Rb,13Rc), wherein the method comprises

detecting a variable available for obtaining the lean angle of the vehicle; and

turning on the plurality of sub headlight light sources (13La,13Lb,13Lc,13Ra,13Rb,13Rc) in accordance with the lean angle of the vehicle obtained based on the detected variable,

turning on the plurality of sub headlight light sources (13La,13Lb,13Lc,13Ra,13Rb,13Rc) in accordance with different lean angles of the vehicle when the lean angle of the vehicle increases, and

turning on upon a large lean angle of the vehicle the sub headlight light source being located lower and outer at the side opposite to the side to which the vehicle is leaning with respect to the width direction of the vehicle than the sub headlight light source configured to be turned on upon a small lean angle of the vehicle, wherein

the main headlight (11) including a reflector (11 a) having an upper end edge (11b) shaped such that a central portion thereof with respect to the width direction of the vehicle protrudes upward when seen from the front side of the vehicle, the two sub headlight units (13L, 13R) being arranged along the upper end edge (11 b), wherein the sub headlight light source that is located highest when the vehicle is upright is positioned above the main headlight (11).

**Patentansprüche**

1. Ein Fahrzeug, das sich in Kurven legt, mit einer Lageneigung zu der Innenseite einer Kurve, und das ein Unter-Scheinwerfer-System und einen Haupt-Scheinwerfer (11) umfasst, die konfiguriert sind, um einen Bereich vor dem Fahrzeug auszuleuchten, das Unter-Scheinwerfer-System umfasst:

   zwei Unter-Scheinwerfer-Einheiten (13L, 13R), angepasst um auf der gleichen Seite, wie die Seite zu welcher sich das Fahrzeug neigt, einen Bereich vor und außerhalb des Fahrzeugs, mit Bezug auf eine Breiten-Richtung des Fahrzeugs, auszuleuchten, die zwei Unter-Scheinwerfer-Einheiten (13L, 13R) sind jede an jeder Seite mit Bezug auf die Breiten-Richtung des Fahrzeugs vorgesehen;
   einen Erfassungs-Teil, angepasst um eine Variable, verfügbar zum Erhalten des Neigungswinkels des Fahrzeugs, zu erfassen; und
   einen Steuer-Teil, angepasst um die Mehrzahl von Unter-Scheinwerfer-Lichtquellen (13La, 13Lb, 13Lc, 13Ra, 13Rb, 13Rc) in Übereinstimmung mit dem Neigungswinkel des Fahrzeugs, erhalten auf Grundlage eines Ergebnisses der Erfassung durch den Erfassungs-Teil, anzuschalten, wobei
   der Haupt-Scheinwerfer (11) einen Reflektor (11a) beinhaltet, der eine obere Endkante (11 b), der so geformt ist dass ein Mittelabschnitt derselben mit Bezug auf die Breiten-Richtung des Fahrzeugs nach oben vorsteht, wenn von der Vorderseite des Fahrzeugs gesehen, **dadurch gekennzeichnet, dass**
   jede der zwei Unter-Scheinwerfer-Einheiten (13L, 13R) eine Mehrzahl von Unter-Scheinwerfer-Lichtquellen (13La, 13Lb, 13Lc, 13Ra, 13Rb, 13Rc) beinhaltet, ausgebildet um auf derselben Seite, wie die Seite zu der sich das Fahrzeug neigt, einen Bereich vor und außerhalb des Fahrzeugs, mit Bezug auf die Breiten-Richtung des Fahrzeugs, auszuleuchten,
   die Mehrzahl von Unter-Scheinwerfer-Lichtquellen (13La, 13Lb, 13Lc, 13Ra, 13Rb, 13Rc) ist angeordnet, so dass unter einem Zustand, in dem das Fahrzeug aufrecht ist, jede derselben an einer Seite, gegenüber zu der Seite, zu der sich das Fahrzeug neigt, zum Anschalten der Mehrzahl von Unter-Scheinwerfer-Lichtquellen (13La, 13Lb, 13Lc, 13Ra, 13Rb, 13Rc), positioniert ist, und die Mehrzahl von Unter-Scheinwerfer-Lichtquellen (13La, 13Lb, 13Rc, 13Ra, 13Rb, 13Rc) sind konfiguriert, um in Übereinstimmung mit unterschiedlichen Neigungswinkeln des Fahrzeugs angeschaltet zu werden, wenn der Neigungswinkel des Fahrzeugs zunimmt, die Unter-Scheinwerfer-Lichtquelle, konfiguriert um bei einem großen Neigungswinkel des Fahrzeugs angeschaltet zu werden ist niedriger und weiter außen angeordnet an der Seite gegenüber zu der Seite zu der sich das Fahrzeug neigt, mit Bezug auf die Breiten-Richtung des Fahrzeugs, als die Unter-Scheinwerfer-Lichtquelle, konfiguriert um bei einem kleinen Neigungswinkel des Fahrzeugs angeschaltet zu werden, wobei die zwei Unter-Scheinwerfer-Einheiten (13L, 13R) entlang der oberen Endkante (11 b) angeordnet sind, wobei die Unter-Scheinwerfer-Lichtquelle, die am höchsten angeordnet ist, wenn das Fahrzeug aufrecht ist, oberhalb des Haupt-Scheinwerfers (11) positioniert ist.

2. Ein Fahrzeug gemäß Anspruch 1, **dadurch gekennzeichnet, dass**, wenn von der Vorderseite des Fahrzeugs gesehen, sind die Mehrzahl von Unter-Scheinwerfer-Lichtquellen (13LA, 13Lb, 13Lc, 13Ra, 13Rb, 13Rc) in der Form eines Kreisbogens, dessen Mitte unterhalb der Mehrzahl der Unter-Scheinwerfer-Lichtquellen (13La, 13Lb, 13Lc, 13Ra, 13Rb, 13Rc) positioniert ist, angeordnet.

3. Ein Fahrzeug gemäß Anspruch 2, **dadurch gekennzeichnet, dass** die Mehrzahl von Unter-Scheinwerfer-Lichtquellen (13La, 13Lb, 13Lc, 13Ra, 13Rb, 13Rc) so angeordnet sind, dass die Mitte des Kreisbogens an einer Position angeordnet ist, an welcher ein Vorderrad (16) des Fahrzeugs auf dem Boden steht, wenn von der Vorderseite des Fahrzeugs gesehen.

4. Ein Fahrzeug gemäß irgendeinem der Ansprüche 1 bis 3, **dadurch gekennzeichnet, dass** die Mehrzahl von Unter-Scheinwerfer-Lichtquellen (13La, 13Lb, 13Lc, 13Ra, 13Rb, 13Rc) angeordnet sind, so dass, wenn irgendeine der Mehrzahl von Unter-Scheinwerfer-Lichtquellen (13LA, 13Lb, 13Lc, 13Ra, 13Rb, 13Rc) durch den Steuer-Teil angeschaltet ist, ist diese Unter-Scheinwerfer-Lichtquelle am Höchsten von der Mehrzahl der Unter-Scheinwerfer-Lichtquellen (13La, 13Lb, 13Lc, 13Ra, 13Rb, 13Rc) angeordnet.

5. Verfahren zur Steuerung eines Unter-Scheinwerfers (13) beinhaltet in einem Fahrzeug, das sich in Kurven legt, mit einer Lageneigung zu der Innenseite einer Kurve, und das einen Haupt-Scheinwerfer (11) umfasst, konfiguriert um einen Bereich vor dem Fahrzeug auszuleuchten, der Unter-Scheinwerfer (13) beinhaltet zwei Unter-Scheinwerfer-Einheiten (13L, 13R), jede beinhaltet eine Mehrzahl von Unter-Scheinwerfer-Lichtquellen (13La, 13Lb, 13Lc, 13Ra, 13Rb, 13Rc), die auf der gleichen Seite, wie die Seite zu welcher sich das Fahrzeug neigt, einen Bereich vor und außerhalb des Fahrzeugs, mit Bezug auf eine Breiten-Richtung des Fahrzeugs, auszuleuchten, die zwei Unter-Scheinwerfer-Einheiten (13L, 13R) sind jede an jeder Seite mit Bezug auf die Breiten-Richtung des Fahrzeugs vorgesehen;

die Mehrzahl von Unter-Scheinwerfer-Lichtquellen (13La, 13Lb, 13Lc, 13Ra, 13Rb, 13Rc) ist angeordnet, so dass unter einem Zustand, in dem das Fahrzeug aufrecht ist, jede derselben an einer Seite, gegenüber zu der Seite, zu der sich das Fahrzeug neigt, zum Anschalten der Mehrzahl von Unter-Scheinwerfer-Lichtquellen (13La, 13Lb, 13Lc, 13Ra, 13Rb, 13Rc), positioniert ist, wobei das Verfahren umfasst Erfassen einer Variable, verfügbar zum Erhalten des Neigungswinkels des Fahrzeugs; und

Anschalten der Mehrzahl von Unter-Scheinwerfer-Lichtquellen (13La, 13Lb, 13Lc, 13Ra, 13Rb, 13Rc) in Übereinstimmung mit dem Neigungswinkel des Fahrzeugs, erhalten auf Grundlage der erfassten Variable,

Anschalten der Mehrzahl von Unter-Scheinwerfer-Lichtquellen (13La, 13Lb, 13Rc, 13Ra, 13Rb, 13Rc) in Übereinstimmung mit unterschiedlichen Neigungswinkeln des Fahrzeugs, wenn der Neigungswinkel des Fahrzeugs zunimmt, und

Anschalten aufgrund eines großen Neigungswinkel des Fahrzeugs der Unter-Scheinwerfer-Lichtquelle, die niedriger und weiter außen angeordnet ist an der Seite gegenüber zu der Seite zu der sich das Fahrzeug neigt, mit Bezug auf die Breiten-Richtung des Fahrzeugs, als die Unter-Scheinwerfer-Lichtquelle, konfiguriert um bei einem kleinen Neigungswinkel des Fahrzeugs angeschaltet zu werden, wobei der Haupt-Scheinwerfer (11) einen Reflektor (11a) beinhaltet, der eine obere Endkante (11 b), der so geformt ist dass ein Mittelabschnitt derselben mit Bezug auf die Breiten-Richtung des Fahrzeugs nach oben vorsteht, wenn von der Vorderseite des Fahrzeugs gesehen, die zwei Unter-Scheinwerfer-Einheiten (13L, 13R) sind entlang der oberen Endkante (11 b) angeordnet, wobei die Unter-Scheinwerfer-Lichtquelle, die am höchsten angeordnet ist, wenn das Fahrzeug aufrecht ist, oberhalb des Haupt-Scheinwerfers (11) positioniert ist.

## Revendications

1.  Véhicule qui gîte dans les virages en présentant une attitude de gîte vers le côté intérieur d'une courbe et qui comprend un sous-système de bloc optique et un projecteur principal (11) configuré pour illuminer une zone située en avant du véhicule,

    le sous-système de bloc optique comprenant :

    deux sous unités de bloc optique (13L, 13R) conçues pour illuminer, du même côté que celui vers lequel le véhicule gîte, une zone en avant et vers l'extérieur du véhicule par rapport à la direction de la largeur du véhicule, les deux sous unités de bloc optique (13L, 13R) étant chacune prévue de chaque côté par rapport à la direction de la largeur du véhicule, et

    un organe de commande conçu pour mettre en service la pluralité de sources auxiliaires de lumière de bloc optique (13La, 13Lb, 13Lc, 13Ra, 13Rb, 13Rc) en fonction de l'angle de gîte du véhicule obtenu sur la base d'un résultat de détection effectuée par l'organe de détection, dans lequel

    le projecteur principal (11) inclut un réflecteur (11a) comportant un bord d'extrémité supérieure (11b) de forme telle que la partie centrale de celui-ci, par rapport à la direction de la largeur, dépasse vers le haut lorsqu'elle est vue depuis le côté avant du véhicule,

    **caractérisé en ce que**

    chacune des deux sous unités de bloc optique (13L, 13R) inclut une pluralité de sources auxiliaires de lumière (13La, 13Lb, 13Lc, 13Ra, 13Rb, 13Rc) conçue pour éclairer, du même côté que celui vers lequel gîte le véhicule, une zone en avant et vers l'extérieur du véhicule par rapport à la direction de la largeur du véhicule,

    la pluralité de sources auxiliaires de lumière de bloc optique (13La, 13Lb, 13Lc, 13Ra, 13Rb, 13Rc) étant agencée de telle sorte que, lorsque le véhicule est vertical, chacune d'entre elles est positionnée du côté opposé au côté vers lequel gîte le véhicule pour mettre en service la pluralité de sources auxiliaires de lumière de bloc optique (13La, 13Lb, 13Lc, 13Ra, 13Rb, 13Rc), et la pluralité de sources auxiliaires de lumière de bloc optique (13La, 13Lb, 13Lc, 13Ra, 13Rb, 13Rc) étant configurée pour être mise en service en fonction de différents angles de gîte du véhicule lorsque l'angle de gîte du véhicule augmente,

    la source auxiliaire de lumière de bloc optique, configurée pour être mise en service lors d'un angle important de gîte du véhicule, est située plus bas et plus vers l'extérieur du côté opposé au côté vers lequel gîte le véhicule par rapport à la direction de la largeur du véhicule que la source auxiliaire de lumière de bloc optique, configurée pour être mise en service lors d'un faible angle de gîte du véhicule, les deux unités auxiliaires de bloc optique (13L, 13R) étant agencées le long du bord d'extrémité supérieure (11b) et la source auxiliaire de lumière de bloc optique, qui est située à la position la plus élevée lorsque le véhicule est vertical, étant positionnée au-dessus du projecteur principal (11).

**2.** Véhicule selon la revendication 1, **caractérisé en ce que**, lorsqu'elle est vue depuis le côté avant du véhicule, la pluralité de sources auxiliaires de lumière de bloc optique (13La, 13Lb, 13Lc, 13Ra, 13Rb, 13Rc) est agencée sous la forme d'un arc de cercle dont le centre est situé en dessous de la pluralité de sources auxiliaires de lumière de bloc optique (13La, 13Lb, 13Lc, 13Ra, 13Rb, 13Rc).

**3.** Véhicule selon la revendication 2, **caractérisé en ce que** la pluralité de sources auxiliaires de lumière de bloc optique (13La, 13Lb, 13Lc, 13Ra, 13Rb, 13Rc) est agencée de telle sorte que le centre de l'arc de cercle est situé à une position où la roue avant (16) du véhicule est à terre lorsqu'elle est vue du côté avant du véhicule.

**4.** Véhicule selon l'une quelconque des revendications 1 à 3, **caractérisé en ce que** la pluralité de sources auxiliaires de lumière de bloc optique (13La, 13Lb, 13Lc, 13Ra, 13Rb, 13Rc) est agencée de telle sorte que, lorsque l'une quelconque de la pluralité de sources auxiliaires de lumière de bloc optique (13La, 13Lb, 13Lc, 13Ra, 13Rb, 13Rc) est mise en service par l'organe de commande, ladite source auxiliaire de lumière de bloc optique est située à la position la plus haute parmi la pluralité de sources auxiliaires de lumière de bloc optique (13La, 13Lb, 13Lc, 13Ra, 13Rb, 13Rc).

**5.** Procédé de commande d'un projecteur auxiliaire (13) inclus dans un véhicule qui gîte dans des virages en présentant une attitude de gîte vers le côté intérieur d'une courbe et qui comprend un projecteur principal (11) configuré pour illuminer une zone située en avant du véhicule,

le sous-système de bloc optique incluant deux sous unités de bloc optique (13L, 13R) chacune incluant une pluralité de sources auxiliaires de lumière de bloc optique (13La, 13Lb, 13Lc, 13Ra, 13Rb, 13Rc) qui éclairent, du même côté que celui vers lequel le véhicule gîte, une zone en avant et vers l'extérieur du véhicule par rapport à la direction de la largeur du véhicule, les deux sous unités de bloc optique (13L, 13R) étant chacune prévue de chaque côté par rapport à la direction de la largeur du véhicule,

la pluralité de sources auxiliaires de lumière de bloc optique (13La, 13Lb, 13Lc, 13Ra, 13Rb, 13Rc) étant agencée de telle sorte que, lorsque le véhicule est vertical, chacune d'entre elles est positionnée du côté opposé au côté vers lequel gîte le véhicule pour mettre en service la pluralité de sources auxiliaires de lumière de bloc optique (13La, 13Lb, 13Lc, 13Ra, 13Rb, 13Rc), le procédé comprenant :

la détection d'une variable disponible pour obtenir l'angle de gîte du véhicule, et la mise en service de la pluralité de sources auxiliaires de lumière de bloc optique (13La, 13Lb, 13Lc, 13Ra, 13Rb, 13Rc) en fonction de l'angle de gîte du véhicule, obtenu sur la base la variable détectée,

la mise en service de la pluralité de sources auxiliaires de lumière de bloc optique (13La, 13Lb, 13Lc, 13Ra, 13Rb, 13Rc) en fonction de différents angles de gîte du véhicule lorsque l'angle de gîte du véhicule augmente, et

la mise en service, lors d'un angle important de gîte du véhicule, de la source auxiliaire de lumière de bloc optique qui est située plus bas et plus vers l'extérieur du côté opposé au côté vers lequel gîte le véhicule par rapport à la direction de la largeur du véhicule que la source auxiliaire de lumière de bloc optique configurée pour être mise en service lors d'un faible angle de gîte du véhicule, où

le projecteur principal (11) inclut un réflecteur (lia) comportant un bord d'extrémité supérieure (11b) de forme telle que la partie centrale de celui-ci par rapport à la direction de la largeur du véhicule dépasse vers le haut lorsqu'elle est vue depuis le côté avant du véhicule, les deux sous unités de bloc optique (13L, 13R) étant agencées le long du bord d'extrémité supérieure (11b), la source auxiliaire de lumière de bloc optique, qui est située à la position la plus haute lorsque le véhicule est vertical, étant positionnée au-dessus du projecteur principal (11).

FIG.1

FIG.2

FIG.3

FIG.4

(a)

(b)

FIG.5

(a)

(b)

(c)

FIG.6

FIG.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050270785 A1

- JP 2009120057 A